# FASCICULE DE BREVET EUROPEEN

(11) **EP 3 090 243 B1**
(45) Date de publication et mention de la délivrance du brevet: **05.02.2020**
(21) Numéro de dépôt: 14831043.6
(22) Date de dépôt: 30.12.2014
(51) Int. Cl.: G01M 13/028, G01M 13/02, G01M 15/05, G01M 15/12, G05B 23/02, G07C 3/00

(54) **SYSTEME ET PROCEDE D'AIDE AU DIAGNOSTIC DE L'ETAT DE FONCTIONNEMENT D'UNE MACHINE TOURNANTE**
SYSTEM UND VERFAHREN ZUR UNTERSTÜTZUNG DER DIAGNOSE EINES BETRIEBSZUSTANDS EINER ROTATIONSMASCHINE
SYSTEM AND METHOD FOR ASSISTING WITH THE DIAGNOSIS OF THE OPERATING CONDITION OF A ROTARY MACHINE

(30) Priorité: 30.12.2013 FR 1363709
(43) Date de publication de la demande: 09.11.2016
(73) Titulaire: Howden Solyvent-Ventec, 69330 Meyzieu (FR)
(72) Inventeur: SIVO, Michel, F-71210 Ecuisses (FR); LOUISOT, Alain, Bernard, Dominique, F-69620 Le Bois d'Oingt (FR); AMOR, Didier, François, Hugues, F-31530 Levignac (FR)
(74) Mandataire: Weber, Jean-François
(86) Numéro de dépôt international: PCT/FR2014/053582
(87) Numéro de publication internationale: WO 2015/101755

(56) Documents cités:
- EP-A2- 2 172 887
- EP-A2- 2 172 887
- CN-A- 101 135 894
- CN-A- 101 135 894
- US-A1- 2004 123 600
- US-A1- 2004 123 600
- US-A1- 2004 123 600
- US-A1- 2006 070 435
- US-A1- 2006 070 435
- US-A1- 2010 280 797
- US-A1- 2010 280 797
- US-A1- 2010 280 797

## Description

### DOMAINE TECHNIQUE

La présente invention se rapporte au domaine technique général de la maintenance industrielle des machines tournantes, du genre ventilateurs industriels, notamment des systèmes et des procédés permettant de détecter ou de prédire des pannes.

La présente invention concerne plus particulièrement un système d'aide au diagnostic de l'état de fonctionnement d'au moins une machine tournante industrielle formée par un groupe moto-ventilateur industriel comprenant un moteur et une hélice de ventilation entraînée en rotation par ledit moteur, ou par un groupe motopompe industriel comprenant une roue de pompage, ledit système d'aide au diagnostic comprenant un support de base et un moyen de réception de signaux solidaire du support de base, le moyen de réception de signaux étant conçu pour réceptionner des signaux représentatifs de valeurs brutes d'au moins un paramètre de fonctionnement de ladite au moins une machine tournante, les valeurs brutes étant captées au sein de ladite au moins une machine tournante.

L'invention concerne également un procédé d'aide au diagnostic de l'état de fonctionnement d'au moins une machine tournante industrielle formée par un groupe moto-ventilateur industriel comprenant un moteur et une hélice de ventilation entraînée en rotation par ledit moteur, ou par un groupe motopompe industriel comprenant une roue de pompage, ledit procédé d'aide au diagnostic comportant une étape de réception de signaux représentatifs de valeurs brutes d'au moins un paramètre de fonctionnement de ladite au moins une machine tournante, les valeurs brutes étant captées au sein de ladite au moins une machine tournante.

L'invention concerne en outre un support pouvant être lu par un ordinateur et sur lequel est enregistré un logiciel d'exploitation.

### TECHNIQUE ANTERIEURE

On connait un système de récupération de signaux provenant d'une machine tournante, en particulier un ventilateur de type industriel, lequel est muni d'éléments tournants tels qu'un arbre ou une hélice, ledit système permettant à un utilisateur d'effectuer des vérifications et des relevés d'informations sur l'état de fonctionnement de la machine, afin notamment d'être en mesure d'anticiper des futures pannes, ou de détecter des disfonctionnements éventuels.

Ce système connu comprend un coffret destiné à être fermé et verrouillé, et généralement apposé à la machine elle-même ou à proximité de celle-ci, par exemple sur un mur. Le coffret de ce système connu est conçu pour protéger et renfermer un dispositif de réception de signaux permettant de réceptionner et de stocker des signaux en provenance de la machine, en particulier des signaux électriques émis par des capteurs placés au cœur de ladite machine. Ces capteurs se présentent en général majoritairement sous la forme de capteurs de vibrations (par exemple des accéléromètres) placés sur les éléments tournants ou non tournants de la machine, tels que des paliers, des roulements, des arbres ou des pales d'hélice. Ces capteurs peuvent également se présenter sous la forme de capteurs de vitesse de rotation des éléments tournants, de couple, de température, ou de mesure acoustique. En substance, les capteurs sont conçus pour capter des paramètres, qui après analyse, permettent d'apprécier l'état de fonctionnement de la machine, et pour transmettre lesdits paramètres sous forme de signaux électriques au dispositif de réception, généralement par l'intermédiaire de câbles électriques passant au travers d'une paroi du coffret.

Avant de pouvoir effectuer le traitement et l'analyse des paramètres en question, l'utilisateur doit connecter un ordinateur muni d'une carte d'acquisition spécifique au dispositif de réception de signaux situé à l'intérieur du coffret, afin de disposer d'une interface homme-machine. La carte d'acquisition de l'ordinateur est conçue pour être reliée au dispositif de réception par l'intermédiaire d'un ou plusieurs câbles de communication, la connexion de ceux-ci nécessitant le déverrouillage et l'ouverture du coffret. Une telle opération ne peut être effectuée que par un utilisateur accrédité, qui est de préférence un expert, et dispose des droits d'accès nécessaires se présentant par exemple sous la forme d'une clé correspondant à une serrure du coffret, ou d'un code de déverrouillage qu'il a mémorisé, permettant de déverrouiller un cadenas bloquant l'accès au contenu du coffret.

L'accès au contenu du coffret est ainsi restreint aux utilisateurs accrédités. En revanche, quelle que soit la nature et l'importance de la vérification à effectuer, il est nécessaire de déployer des moyens relativement conséquents, savoir un utilisateur à haut niveau d'expertise, muni d'un ordinateur de maintenance avec carte d'acquisition spécifique, et de droits d'accès au coffret, ce qui peut se révéler coûteux en terme de temps et de logistique, mais qui est obligatoire pour assurer la maintenance du ventilateur industriel. En pratique, il peut parfois se révéler difficile et coûteux dans le cadre de l'industrie d'obtenir la disponibilité d'un tel utilisateur accrédité dont la compétence est rare, ainsi que la disponibilité de son matériel d'analyse.

Le temps de l'intervention de l'utilisateur accrédité est également augmenté par le fait que celui-ci est contraint d'effectuer, à chaque ouverture du coffret, un branchement correct de son ordinateur de maintenance au dispositif de réception, et une configuration correcte dudit ordinateur pour être en mesure de traiter et analyser les paramètres de fonctionnement du ventilateur industriel. Il est nécessaire à ce sujet que l'utilisateur accrédité soit en mesure de détecter toute erreur de branchement ou de configuration afin de garantir la fiabilité de l'analyse, ce qui présente une difficulté supplémentaire.

L'utilisateur accrédité procède à l'analyse des paramètres de fonctionnement sur l'ordinateur de maintenance, lesquelles apparaissent brutes et non traitées. Pour cela, l'utilisateur organise et trie généralement les données, et les met en forme à l'aide d'un logiciel, par exemple sous la forme de graphes en fonction du temps ou d'un spectre fréquentiel (à l'aide d'une transformée de fourrier par exemple). En effectuant une analyse fréquentielle des vibrations subies par le ventilateur industriel selon son savoir-faire et son expérience, il peut être en mesure d'associer le comportement fréquentiel de certains paramètres (notamment grâce à la présence ou l'absence d'harmoniques caractéristiques) à un état de fonctionnement connu. Par exemple, un problème d'équilibrage peut se manifester par un niveau de vibrations élevé à la fréquence de rotation du ventilateur industriel, alors qu'un défaut d'alignement est davantage prompt à se traduire par un niveau de vibrations élevé pour des harmoniques de la fréquence de rotation de la machine. Ce type d'analyse peut donc permettre à l'utilisateur accrédité de détecter notamment un balourd ou un désalignement de pièces tournantes du ventilateur industriel. Une analyse temporelle peut lui permettre, quant à elle, de détecter un choc, ou un vieillissement d'une pièce en particulier se traduisant par exemple par l'évolution d'un paramètre au cours du temps.

L'utilisateur accrédité doit donc disposer de connaissances suffisantes pour être en mesure d'analyser les paramètres de façon unitaire et manuelle (notamment pour effectuer une analyse vibratoire de ces derniers) afin de fournir *in fine* un diagnostic complet et fiable de l'état de fonctionnement du ventilateur industriel. Par conséquent, la fourniture d'un tel diagnostic est consommatrice d'une quantité substantielle de temps et peut se révéler fastidieux. De plus, l'utilisateur accrédité ne dispose d'aucun moyen pour vérifier le bien fondé de son analyse, de sorte qu'il est le seul juge de la nature d'un éventuel disfonctionnement qu'il aurait détecté, et porte à lui seul la responsabilité de l'interprétation des données, et des conséquences par exemple en terme de fiabilité du procédé industriel auquel est associé le ventilateur, ou de sécurité que pourraient causer un disfonctionnement non, ou mal, détecté.

En définitive, si le système de l'art antérieur se révèle suffisant et adapté à certaines situations, il ne semble cependant pas adapté pour être manipulé par un utilisateur non expérimenté en matière d'analyse de paramètres de fonctionnement, et pourrait être amélioré à de nombreux égards, notamment en matière de coûts et de temps de maintenance. Un exemple de système d'aide au diagnostique existant est décrit par le document EP2172887.

### EXPOSE DE L'INVENTION

Les objets assignés à la présente invention visent en conséquence à porter remède aux inconvénients de l'art antérieur mentionnés précédemment et à proposer un nouveau système et un nouveau procédé d'aide au diagnostic permettant d'assurer facilement, rapidement, et de manière flexible, la maintenance d'une machine tournante industrielle.

Un autre objet de l'invention vise à proposer un nouveau système et un nouveau procédé d'aide au diagnostic dont la mise en œuvre peut être effectuée par des utilisateurs sans qualification particulière ou experte dans le domaine de la maintenance industrielle.

Un autre objet de l'invention vise à proposer un nouveau système et un nouveau procédé d'aide au diagnostic qui, tout en permettant d'effectuer une analyse complète et fiable de l'état de fonctionnement de machines tournantes industrielles, permet de réduire la durée et la difficulté d'une telle analyse.

Un autre objet de l'invention vise à proposer un nouveau système et un nouveau procédé d'aide au diagnostic permettant d'abaisser le coût des opérations de maintenance.

Un autre objet de l'invention vise à proposer un nouveau système et un nouveau procédé d'aide au diagnostic contribuant à assurer la sécurité d'un environnement industriel.

Un autre objet de l'invention vise à proposer un nouveau système et un nouveau procédé d'aide au diagnostic de conception robuste et adaptée au contexte industriel.

Un autre objet de l'invention vise à proposer un nouveau système et un nouveau procédé d'aide au diagnostic adaptable en fonction du niveau de compétences de l'utilisateur.

Un autre objet de l'invention vise à proposer un nouveau système et un nouveau procédé d'aide au diagnostic compatible avec tout équipement industriel.

Les objets assignés à l'invention sont atteints à l'aide d'un système d'aide au diagnostic de l'état de fonctionnement d'au moins une machine tournante industrielle formée par un groupe moto-ventilateur industriel comprenant un moteur et une hélice de ventilation entraînée en rotation par ledit moteur, ou par un groupe motopompe industriel comprenant une roue de pompage, ledit système d'aide au diagnostic comprenant un support de base et un moyen de réception de signaux solidaire du support de base, le moyen de réception de signaux étant conçu pour réceptionner des signaux représentatifs de valeurs brutes d'au moins un paramètre de fonctionnement de ladite au moins une machine tournante, les valeurs brutes étant captées au sein de ladite au moins une machine tournante, le système comprenant également un moyen d'interprétation de l'état de fonctionnement conçu pour interpréter automatiquement les valeurs brutes réceptionnées et pour générer un diagnostic de l'état de fonctionnement de ladite au moins une machine tournante en fonction desdites valeurs brutes, caractérisé en ce que le support de base comprend un boîtier, le moyen de réception des signaux étant placé à l'intérieur dudit boîtier, le système d'aide au diagnostic comprenant comprend un dispositif d'interface permettant à un utilisateur d'accéder au diagnostic, le dispositif d'interface comprenant un écran local conçu pour afficher une interface interactive, l'écran local étant disposé sur ledit boîtier ou dans le boîtier, l'interface interactive permettant à l'utilisateur d'accéder à des niveaux de diagnostic distincts, comprenant au moins :
- un premier niveau de diagnostic dans lequel l'utilisateur peut accéder au diagnostic et lire directement l'état de fonctionnement,
- un deuxième niveau de diagnostic dans lequel l'utilisateur peut accéder aux valeurs brutes.

Les objets assignés à l'invention sont également atteints à l'aide d'un procédé d'aide au diagnostic de l'état de fonctionnement d'au moins une machine tournante industrielle formée par un groupe moto-ventilateur industriel comprenant un moteur et une hélice de ventilation entraînée en rotation par ledit moteur, ou par un groupe motopompe industriel comprenant une roue de pompage, ledit procédé d'aide au diagnostic comportant une étape de réception de signaux à l'aide d'un moyen de réception solidaire d'un support de base comprenant un boîtier, le moyen de réception des signaux étant placé à l'intérieur dudit boîtier, lesdits signaux étant représentatifs de valeurs brutes d'au moins un paramètre de fonctionnement de ladite au moins une machine tournante, les valeurs brutes étant captées au sein de ladite au moins une machine tournante, le procédé comportant également une étape d'interprétation automatique des valeurs brutes réceptionnées et une étape de génération d'un diagnostic de l'état de fonctionnement de ladite au moins une machine tournante en fonction desdites valeurs brutes, ledit procédé étant caractérisé en ce qu'il comprend en outre une étape d'accès par un utilisateur à des niveaux de diagnostic distincts via une interface interactive affichée par un écran local disposé sur ledit boîtier ou dans ledit boîtier, comprenant au moins :
- un premier niveau de diagnostic dans lequel l'utilisateur accède au diagnostic et lit directement l'état de fonctionnement,
- un deuxième niveau de diagnostic dans lequel l'utilisateur accède aux valeurs brutes.

Les objets assignés à l'invention sont atteints en outre à l'aide d'un support pouvant être lu par un ordinateur et sur lequel est enregistré un logiciel d'exploitation, caractérisé en ce que le logiciel d'exploitation permet d'effectuer les étapes d'interprétation automatique et de génération du diagnostic du procédé d'aide au diagnostic.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés à titre purement illustratif et non limitatif, dans lesquels :
- La figure 1 est un schéma synoptique représentant symboliquement le fonctionnement du système d'aide au diagnostic selon l'invention.
- La figure 2 représente une vue d'une interface interactive du système d'aide au diagnostic de la figure 1 selon l'invention.
- La figure 3 représente une vue de face d'un support de base du système d'aide au diagnostic de la figure 1 selon l'invention.
- La figure 4 représente un graphe temporel de valeurs brutes, affichable au sein de l'interface interactive de la figure 2.
- La figure 5 représente histogramme de valeurs brutes, affichable au sein de l'interface interactive de la figure 2.
- La figure 6 représente un graphe fréquentiel de valeur brutes, affichable au sein de l'interface interactive de la figure 2.
- La figure 7 représente un message de diagnostic affichable au sein de l'interface interactive de la figure 2.
- La figure 8 représente un premier écran de configuration affichable au sein de l'interface interactive de la figure 2.
- La figure 9 représente un deuxième écran de configuration affichable au sein de l'interface interactive de la figure 2.

### MEILLEURE MANIÈRE DE REALISER L'INVENTION

L'invention concerne un système 100 d'aide au diagnostic conçu pour être mis en place et utilisé dans un contexte industriel ou professionnel.

Le système 100 est destiné à offrir à un utilisateur une aide au diagnostic de l'état de fonctionnement d'au moins une machine tournante M1, M2, M3 industrielle, du genre ventilateur ou pompe rotative, formée par un groupe moto-ventilateur industriel comprenant un moteur et une hélice de ventilation entraînée en rotation par ledit moteur, ou par un groupe motopompe industriel comprenant une roue de pompage. La machine tournante M1, M2, M3 diagnostiquée comporte au moins un élément en rotation lui permettant d'effectuer par exemple une action de pompage, de ventilation, d'entraînement, ou de production d'énergie. Cet élément en rotation peut se présenter sous la forme par exemple d'une roue de pompage, d'une roue de ventilateur, d'un rotor de moteur, ou d'une turbine d'alternateur. Le système 100 d'aide au diagnostic est conçu pour aider au diagnostic Dc de l'état de fonctionnement de machines tournantes M1, M2, M3 qui sont des groupes moto-ventilateurs industriels ou de groupes motopompes industriels. Ladite au moins une machine tournante M1, M2, M3 est ainsi de préférence un groupe moto-ventilateur, comprenant un moteur et une hélice de ventilation, le moteur étant conçu pour entraîner en rotation l'hélice de ventilation et étant préférentiellement un moteur électrique. Ladite au moins une machine tournante M1, M2, M3 est alternativement un groupe motopompe, comprenant préférentiellement un moteur, par exemple électrique, et une roue de pompage entraînée par ledit moteur.

De préférence, ladite au moins une machine tournante M1, M2, M3 est un ventilateur industriel ou un groupe motopompe industriel, c'est-à-dire qu'il est conçu pour un usage industriel, et non pas domestique par exemple. Il est donc dans ce cas associé par exemple à un procédé industriel, à une ligne ou à des locaux de fabrication, au système de ventilation d'un immeuble de bureaux, ou encore à une machine dont il assure l'aération, la dépollution ou le refroidissement. De préférence, ladite au moins une machine tournante M1, M2, M3 peut se présenter sous la forme d'une pompe rotative ou d'un compresseur rotatif, et est dès lors destiné à pomper un fluide grâce à la force centrifuge ou à un entraînement mécanique du fluide, au cours d'un processus industrialisé, en étant dans ce cas soit associée à une machine de production, soit placée au coeur du fonctionnement de ladite machine. De façon préférentielle, la machine tournante M1, M2, M3 est solidaire d'une structure fixe, comme par exemple une usine, un système de ventilation d'un bâtiment, une machine, ou une installation industrielle, est par exemple fixée au sol à un mur ou à un plafond d'un bâtiment ou d'une salle.

Au sens de l'invention, on entend par « *groupe motopompe* » une unité comprenant à la fois un moteur et un moyen de pompage entraîné par ledit moteur. De la même manière, on entend par «*groupe moto-ventilateur»* une unité comprenant à la fois un moteur et un moyen de ventilation entraîné par ledit moteur.

De préférence, ladite au moins une machine tournante M1, M2, M3 est avantageusement associée à un procédé industriel, et est de préférence indispensable au bon déroulement de ce dernier. Ainsi, il est nécessaire de s'assurer que ladite au moins une machine tournante M1, M2, M3 n'est pas susceptible de tomber en panne à un moment inopportun, tout disfonctionnement pouvant être de nature à affecter ou même à interrompre de manière particulièrement néfaste le processus industriel auquel ladite au moins une machine tournante M1, M2, M3 est associée. Pour cela, il est nécessaire de contrôler son état de fonctionnement, c'est-à-dire d'être capable d'analyser si les éléments constitutifs de ladite au moins une machine industrielle sont chacun dans un état fonctionnel apte à permettre le bon fonctionnement de ladite au moins une machine industrielle dans le présent et / ou dans le futur. Dans le cadre de l'invention, il est ainsi nécessaire d'effectuer un diagnostic Dc de l'état de fonctionnement de ladite au moins une machine tournante M1, M2, M3, ce qui signifie d'effectuer une telle analyse de l'état des éléments constitutifs de ladite au moins une machine tournante M1, M2, M3 grâce à l'observation et à l'interprétation de symptômes de ladite au moins une machine tournante M1, M2, M3, ou de comportements de cette dernière.

Préférentiellement, le diagnostic Dc comprend le signalement, le cas échéant, d'une détection d'un ou plusieurs défauts. A titre d'exemples non limitatifs, ces défauts peuvent être un balourd (causé par une usure, ou une perte de pale d'hélice par exemple), un désalignement, une courbure d'arbre, un défaut de liaison poulie-courroie (lié à un problème de tension, d'alignement ou d'irrégularité de la liaison), un jeu anormal, une vibration anormale, un bruit anormal, des chocs, une température anormale, un défaut de palier, un défaut de roulement (en particulier de l'une de ses bagues ou de l'un de ses éléments roulants, par usure, oxydation ou rupture), un défaut d'engrenage (en particulier l'usure des dents, réglage du jeu de fond de roulement), etc.

Le système 100 d'aide au diagnostic contribue ainsi, selon l'invention, à permettre à un utilisateur d'obtenir le diagnostic Dc, de sorte que l'utilisateur est en mesure d'effectuer la surveillance et le contrôle de l'état de fonctionnement de ladite au moins une machine tournante M1, M2, M3, afin d'accomplir par exemple une action de maintenance, de préférence une action de maintenance préventive, voire prédictive, sur ladite au moins une machine tournante M1, M2, M3.

Selon l'invention, le système 100 comprend un support de base 50 et un moyen de réception 10 de signaux S1, S2, S3 solidaire du support de base 50. Le support de base 50 sert de socle au moyen de réception 10 de signaux S1, S2, S3. Le support de base 50 peut être rattaché soit à ladite au moins une machine tournante M1, M2, M3, soit à un élément fixe tel qu'un mur, le sol, ou un pylône, par exemple appartenant à l'atelier dans lequel est installée ladite au moins une machine tournante M1, M2, M3, ou à une salle de contrôle située à proximité. Le support de base 50 est de préférence destiné à être placé à proximité de ladite au moins une machine tournante M1, M2, M3. Le support de base 50 sert également optionnellement à isoler le moyen de réception 10 de signaux S1, S2, S3 de l'extérieur, de manière à le protéger de l'environnement industriel dans lequel il est placé (par exemple source d'humidité, et/ou de chaleur, et/ou de projections néfastes à son fonctionnement), et / ou d'empêcher un utilisateur non averti d'accéder audit moyen de réception 10 de signaux S1, S2, S3, afin d'assurer la sécurité dudit utilisateur, et de garantir l'intégrité dudit moyen de réception 10 de signaux S1, S2, S3.

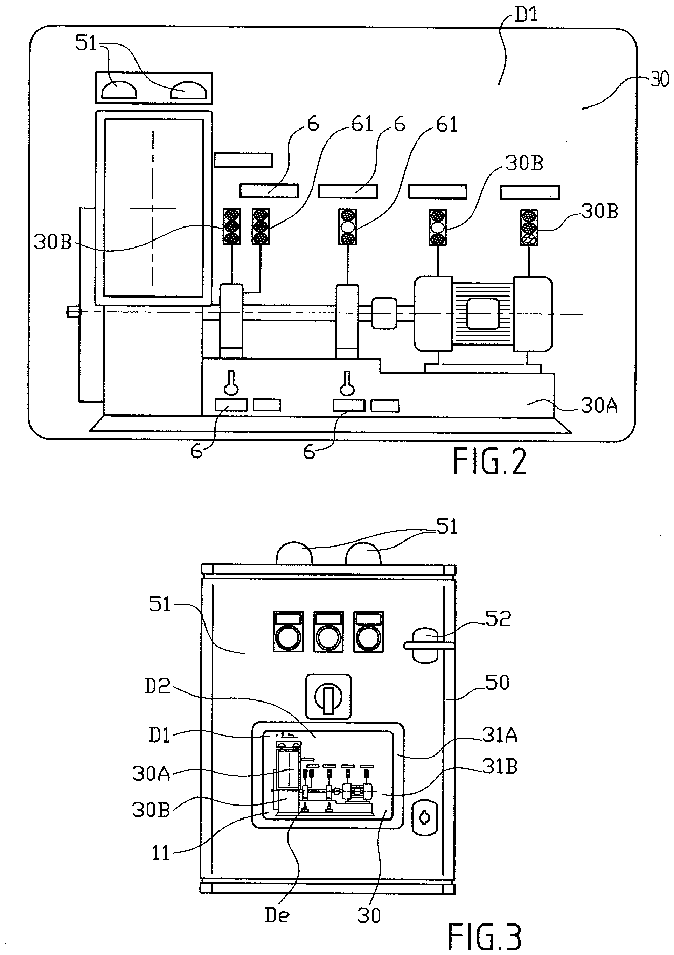

Selon une variante préférentielle de l'invention, le support de base 50 est représenté à la figure 3 comme comprenant un boîtier, du genre armoire ou coffret, conçu pour être fermé et verrouillé à l'aide d'une porte 51 dudit boîtier, laquelle ne peut être ouverte que par un utilisateur averti, le moyen de réception 10 des signaux S1, S2, S3 étant placé à l'intérieur dudit boîtier. Le boîtier est de préférence métallique ou en matière plastique opaque, de forme générale parallélépipédique, comportant une porte 51 frontale conçue pour pivoter sur des gonds et comportant un moyen de verrouillage 52 tel qu'une serrure. Préférentiellement, le boîtier comporte également un fond vertical et un plancher, par l'intermédiaire de l'un desquels le support de base 50 peut être fixé à un élément fixe, tel qu'un mur, un pilier, le sol, un rack, ou ladite au moins une machine tournante M1, M2, M3 elle-même à la manière d'un coffret classique.

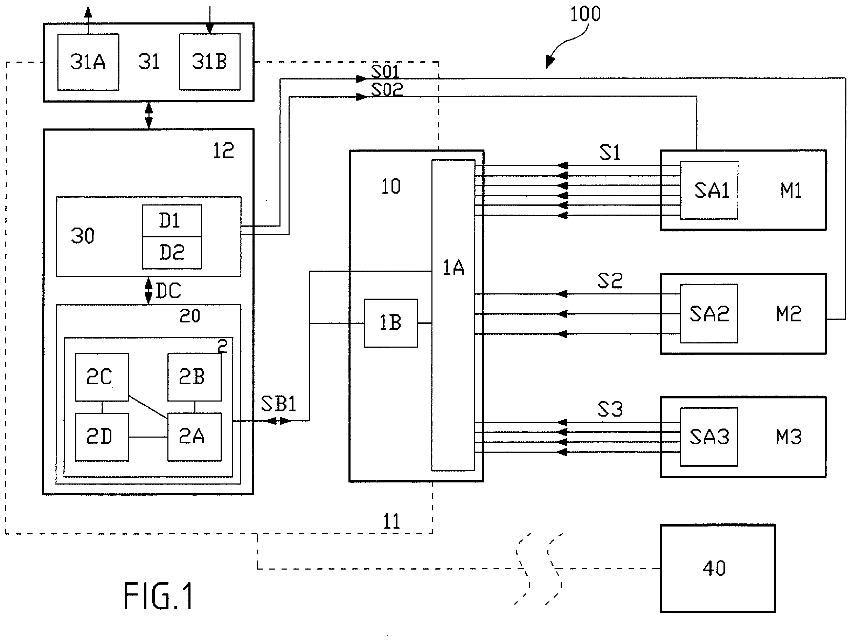

Qu'il soit protégé ou non par un boîtier, le moyen de réception 10 de signaux S1, S2, S3 selon l'invention est conçu pour réceptionner des signaux S1, S2, S3 en provenance de ladite au moins une machine tournante M1, M2, M3 (tel qu'illustré à la figure 1), lesdits signaux S1, S2, S3 étant représentatifs de valeurs brutes 6 d'au moins un paramètre de fonctionnement de ladite au moins une machine tournante M1, M2, M3.

Ainsi, les signaux S1, S2, S3 sont représentatifs d'au moins un paramètre de fonctionnement de ladite au moins une machine tournante M1, M2, M3, ledit au moins un paramètre de fonctionnement étant susceptible d'être utile dans la génération d'un diagnostic Dc de l'état de fonctionnement de ladite au moins une machine tournante M1, M2, M3, en témoignant par exemple de symptômes ou de grandeurs physiques significatives de l'état de fonctionnement.

Les signaux S1, S2, S3 représentent de préférence plusieurs paramètres de fonctionnement de type vitesse et/ou accélération et/ou vibrations et/ou température et/ou couple et/ou force et/ou mesure acoustique et/ou puissance électrique consommée d'un ou plusieurs composants fonctionnels de ladite au moins une machine tournante M1, M2, M3, cette liste de paramètres de fonctionnement étant bien entendu donnée à titre illustratif et non limitatif. Les composants fonctionnels sont de préférence des pièces ou des éléments importants du fonctionnement de ladite au moins une machine tournante M1, M2, M3 et ayant une influence plus ou moins directe sur son état de fonctionnement, tels que des paliers, des roulements ou leurs bagues, des pales d'hélice, des arbres, des rotors de moteur, etc. Cette liste est bien évidemment également donnée à titre illustratif et non exhaustif.

Le moyen de réception 10 de signaux S1, S2, S3 permet ainsi de réceptionner matériellement des informations envoyées depuis ladite au moins une machine tournante M1, M2, M3 sous forme de signaux S1, S2, S3 ou de messages codés. Selon l'invention, les valeurs brutes 6 sont captées au sein de ladite au moins une machine tournante M1, M2, M3 (tel que représenté à la figure 1). Les signaux S1, S2, S3 jouent alors le rôle de moyen de transport des valeurs brutes 6 prélevées au niveau de ladite au moins une machine tournante M1, M2, M3 jusqu'au moyen de réception 10 de signaux S1, S2, S3.

De préférence, le moyen de réception 10 comprend des ports 1A de réception conçus pour recevoir les signaux S1, S2, S3 et pour en extraire les valeurs brutes 6, en effectuant par exemple un décodage ou une simple lecture afin de convertir lesdits signaux S1, S2, S3 (lesquels sont physiques) en données significatives des valeurs brutes 6, et / ou en signaux d'une autre nature, interprétables par d'autres éléments du système 100 d'aide au diagnostic. Le moyen de réception 10 peut optionnellement assurer que l'ensemble des signaux S1, S2, S3 émis au niveau de ladite au moins une machine tournante M1, M2, M3 ont bien été reçus, par exemple à l'aide d'une vérification de parité ou un contrôle de redondance cyclique, et peut également se charger des les organiser, en les classant par exemple par date de réception, ou par type de valeur brute 6 reçue.

Préférentiellement, les ports 1A sont aptes à recevoir les signaux S1, S2, S3 sous la forme de signaux électriques ou électromagnétiques émis par des capteurs SA1, SA2, SA3 disposés au sein de ladite au moins une machine tournante M1, M2, M3. Les ports 1A sont ainsi connectés aux capteurs SA1, SA2, SA3 par liaison filaire, électrique ou optique, ou sans fil grâce par exemple à l'utilisation d'onde électromagnétiques. Les capteurs SA1, SA2, SA3 sont disposés de préférence à proximité, sur ou à l'intérieur des composants fonctionnels de ladite au moins une machine tournante M1, M2, M3, afin de capter les valeurs brutes 6 desdits au moins un paramètre de fonctionnement.

De préférence, le moyen de réception 10 comprend également une mémoire 1B dans laquelle les valeurs brutes 6 reçues sur une durée prédéterminée sont mémorisées (tel qu'illustré à la figure 1). La mémoire 1B permet avantageusement au moyen de réception 10 de conserver des valeurs brutes 6 prélevées sur une durée prédéterminée en vue de traitements futurs.

Préférentiellement, le moyen de réception 10 comporte un nombre suffisant de ports 1A pour recevoir les valeurs brutes 6 d'un ou plusieurs paramètres de fonctionnement, de préférence un à six paramètres de fonctionnement, d'une ou plusieurs machines tournantes industrielles, de préférence d'une à quatre machine(s) tournante(s) industrielle(s). Ainsi, le moyen de réception 10 peut recevoir, de préférence en permanence, une pluralité de paramètres de fonctionnement d'une pluralité de machines tournantes industrielles, lesdites machines tournantes industrielles étant identiques, de même type, ou de type différent les unes des autres.

Selon une caractéristique importante de l'invention, le système 100 d'aide au diagnostic comprend également un moyen d'interprétation 20 de l'état de fonctionnement conçu pour interpréter automatiquement les valeurs brutes 6 réceptionnées et pour générer un diagnostic Dc de l'état de fonctionnement de ladite au moins une machine tournante M1, M2, M3 en fonction desdites valeurs brutes 6 (tel qu'illustré à la figure 1).

Au sens de l'invention, «*automatiquement»* traduit l'absence partielle ou totale d'intervention de la part de l'utilisateur dans l'interprétation des valeurs brutes 6. Le moyen d'interprétation 20 établit par lui-même une interprétation partielle, voire complète, de l'état de fonctionnement de ladite au moins une machine tournante M1, M2, M3, en se basant sur les valeurs brutes 6 reçues par le moyen de réception 10, et de préférence mémorisées et décodées par celui-ci. Comme le ferait un être humain, le moyen d'interprétation 20 analyse les valeurs brutes 6 dudit au moins un paramètre de fonctionnement afin de tirer des conclusions quant à l'état de fonctionnement de ladite au moins une machine tournante M1, M2, M3, par exemple en mettant les valeurs brutes 6 au service de calculs techniques ou physiques, et / ou de modèles prédéterminés permettant d'estimer ledit état de fonctionnement.

Le système 100 d'aide au diagnostic est conçu de telle manière (de préférence à l'aide d'un dispositif d'interface 31 tel que décrit ci-après) que l'utilisateur est susceptible d'avoir accès au diagnostic Dc généré. Cela permet avantageusement à l'utilisateur d'obtenir le diagnostic Dc de l'état de fonctionnement de ladite au moins une machine tournante M1, M2, M3 sans pour autant disposer de compétences spécifique d'interprétation des paramètres de fonctionnement. Par exemple, en accédant au diagnostic Dc, l'utilisateur peut ainsi immédiatement savoir, quel que soit son niveau de compétence, si ladite au moins une machine tournante M1, M2, M3 est fonctionnelle, ou présente un disfonctionnement, si une révision prochaine est à effectuer, si un composant fonctionnel de ladite au moins une machine tournante M1, M2, M3 en particulier est défaillant, le moyen d'interprétation 20 renseignant ledit utilisateur en temps réel et / ou sur demande de celui-ci, en produisant le diagnostic Dc de manière à ce qu'il soit lisible et interprétable indépendamment du niveau de compétence dudit utilisateur.

Afin de recevoir les valeurs brutes 6 du moyen de réception 10, le moyen d'interprétation 20 est conçu pour communiquer avec celui-ci et est pour cela relié audit moyen de réception 10, par exemple par le biais d'une connexion filaire ou sans fil, ou par un bus de données SB1 (tel qu'illustré à la figure 1). Bien entendu, le moyen de réception 10 pourra communiquer avec le moyen d'interprétation 20 par tout moyen connu. Le moyen de réception 10 est conçu pour convertir les valeurs brutes 6 reçues en valeurs brutes 6 lisibles par le moyen d'interprétation 20.

De préférence, le moyen d'interprétation 20 est également placé à l'intérieur du boîtier du support de base 50, afin d'être isolé de l'extérieur tout comme le moyen de réception 10, et d'être au contact de celui-ci (ce qui permet de simplifier la communication). Cependant, sans sortir du cadre de l'invention, il est envisageable de placer le moyen d'interprétation 20 de façon déportée, lequel doit alors être conçu pour communiquer à distance avec le moyen de réception 10, et pour générer le diagnostic Dc de façon déportée. Cela peut permettre par exemple à une équipe de maintenance d'accéder au diagnostic Dc depuis un point distant de ladite au moins une machine tournante M1, M2, M3, de préférence depuis une pièce différente de celle dans laquelle est placée ladite au moins une machine tournante M1, M2, M3, ou plus préférentiellement depuis un bâtiment différent, ou encore plus préférentiellement depuis une région différente.

L'interprétation peut être effectuée pour l'état de fonctionnement instantané, c'est-à-dire l'état de fonctionnement sensiblement au moment de la mesure des valeurs brutes des paramètres de fonctionnement, le moyen de réception 10 étant dès lors conçu pour recevoir des valeurs brutes 6 sensiblement en direct de manière discrète ou continue. L'interprétation est alors effectuée par le moyen d'interprétation 20 en se basant sur des valeurs brutes 6 mémorisées sur une période de temps débutant dans le passé et finissant dans le présent. L'interprétation peut également être effectuée pour déterminer l'état de fonctionnement sur une période de temps donnée du passé, le moyen d'interprétation 20 se basant alors sur des valeurs brutes 6 mémorisées par le moyen de réception 10 sur un intervalle de temps du passé.

Ainsi, le moyen d'interprétation 20 est conçu de préférence pour exploiter des valeurs brutes 6 reçues sur une durée prédéterminée par le moyen de réception 10, ce dernier comprenant la mémoire 1B dans laquelle les valeurs brutes 6 reçues sur une durée prédéterminée sont mémorisées.

Le moyen d'interprétation 20 comprend avantageusement un moyen de calcul du rendement aéraulique de la machine tournante M1, M2, M3, qui est formée par un groupe moto-ventilateur ou un groupe motopompe, en particulier dans le cas où il s'agit d'un moto-ventilateur, à l'aide notamment des paramètres de fonctionnement suivants, reçus par le moyen de réception 10, grâce à la présence de capteurs adaptés placés au cœur dudit moto-ventilateur :
- pression dynamique,
- pression statique aux bornes de l'hélice de ventilation,
- température à l'aspiration de l'hélice de ventilation,
- vitesse de rotation de l'hélice de ventilation,
- taux de charge du moteur,
- puissance électrique absorbée par le moteur.

De préférence, l'interprétation automatique est effectuée et/ou le diagnostic Dc est généré à intervalles régulier dans le temps, voire en permanence, afin de tenir l'utilisateur informé de l'état de fonctionnement instantané (c'est-à-dire présent) de ladite au moins une machine tournante M1, M2, M3 : dans cette configuration, le système 100 d'aide au diagnostic permet d'effectuer une surveillance de l'état de fonctionnement de ladite au moins une machine tournante M1, M2, M3. De manière préférentielle, l'interprétation peut être effectuée, et/ou le diagnostic Dc peut être généré, sur demande de l'utilisateur.

De préférence, et de manière particulièrement avantageuse, le moyen d'interprétation 20 peut être conçu pour effectuer l'interprétation et générer le diagnostic Dc de manière instantanée, ou au moins de façon plus rapide que ne le ferait l'utilisateur s'il devait effectuer l'interprétation et générer ledit diagnostic Dc manuellement, à l'aide de son esprit, en faisant appel à des compétences d'analyse et d'interprétation 20 des valeurs brutes 6 des paramètres fonctionnels, et en effectuant les calculs directement par lui-même.

De préférence, le moyen d'interprétation 20 suit une méthode prédéterminée pour l'interprétation des valeurs brutes 6 et la génération du diagnostic Dc, et comprend à cet effet une algorithmique d'association 2 et une base de données d'états 2B comprenant une pluralité d'états de fonctionnement connus, l'algorithmique d'association 2 comportant un module d'association 2A permettant d'associer l'état de fonctionnement à l'un des états de fonctionnement connus de la base de données d'états 2B. L'algorithmique d'association 2 comprend de préférence une pluralité de méthodes d'interprétation des valeurs brutes 6 (se présentant sous la forme de procédures algorithmiques), et des moyens de décision permettant de choisir une méthode d'interprétation adaptée en fonction des valeurs brutes 6 relevées, selon la situation. L'exécution de ladite algorithmique d'association 2 permet alors de contribuer à interpréter les valeurs brutes 6 sous la forme d'un ou plusieurs symptômes de l'état de fonctionnement et à générer le diagnostic Dc.

De préférence, le moyen d'interprétation 20 comprend également une base de données d'états 2B comprenant une pluralité d'états de fonctionnement connus (lesquels sont par exemple répertoriés sous forme de tableau, ou de liste), l'algorithmique d'association 2 comportant un module d'association 2A permettant d'associer l'état de fonctionnement à l'un des états de fonctionnement connus de la base de données d'états 2B (tel que représenté à la figure 1).

Ainsi, l'algorithmique d'association 2 comprend de préférence une méthode contenue dans le module d'association 2A permettant d'associer les symptômes (déterminés par l'algorithmique d'association 2 à partir des valeurs brutes 6) à des symptômes se manifestant de façon habituelle, connue ou modélisée, lors d'un état de fonctionnement connu. Ainsi, l'algorithmique d'association 2 peut associer l'état de fonctionnement à un état de fonctionnement connu de sa base de données d'états 2B à l'aide du module d'association 2A, et ainsi diagnostiquer l'état de fonctionnement, c'est-à-dire affirmer par exemple la présence d'un disfonctionnement, ou au contraire l'absence d'un disfonctionnement connu.

De préférence, le moyen d'interprétation 20 est conçu pour interpréter les valeurs brutes 6 de paramètres de fonctionnement (afin de générer le diagnostic Dc) de type vitesse et/ou accélération et/ou vibrations et/ou température et/ou couple et/ou force et/ou débit et/ou pression et/ou mesure acoustique d'un ou plusieurs composants fonctionnels de ladite au moins une machine tournante M1, M2, M3. De manière générale, le moyen d'interprétation 20 base la génération du diagnostic Dc sur l'interprétation de paramètres classiques de mécanique, lesquels sont significatifs de l'état de fonctionnement de ladite au moins une machine tournante M1, M2, M3.

Préférentiellement, l'algorithmique d'association 2 comporte un module d'analyse 2D temporelle et/ou fréquentielle (utilisant par exemple une transformée de Fourrier rapide, dite *« FFT »*) permettant d'effectuer une analyse temporelle et/ou fréquentielle des valeurs brutes 6 et de générer un résultat d'analyse reflétant l'état de fonctionnement. Préférentiellement, le module d'association 2A permet dès lors de comparer le résultat d'analyse à des modèles de résultats de la base de données d'états 2B, les modèles de résultat correspondant à la pluralité d'états de fonctionnement connus, le module d'association 2A permettant d'associer l'état de fonctionnement à l'un des états de fonctionnement connus.

Une ou plusieurs analyse(s) fréquentielle(s) et / ou temporelle(s) est (sont) ainsi effectuée(s) automatiquement, de manière partielle ou complète, par le moyen d'interprétation 20, de sorte qu'il n'est pas nécessaire que l'utilisateur du système 100 d'aide au diagnostic dispose de compétences spécifiques dans le domaine de l'analyse fréquentielle et / ou temporelle pour obtenir le résultat d'analyse.

Dans cette situation, le résultat d'analyse est comparé aux modèles de résultats listés dans la base de données d'états 2B. Les modèles de résultats peuvent se présenter sous la forme de résultats d'analyse que l'on obtient de manière typique, classique, ou systématique pour un état de fonctionnement connu donné. En comparant le résultat d'analyse et les modèles de résultat, le module d'association 2A peut être en mesure (le cas échéant), d'associer le résultat d'analyse à au moins un modèle de résultat. Dans ce cas, ledit au moins un modèle de résultat choisi correspondant à au moins un état de fonctionnement connu, le module d'association 2A peut ainsi mettre en regard l'état de fonctionnement associé au résultat d'analyse avec ledit au moins un état de fonctionnement connu, de manière automatique, sans intervention de l'utilisateur (ou avec une intervention de celui-ci ne requérant pas de compétences dans l'interprétation des valeurs brutes 6). Par exemple, le module d'association 2A pourra associer un niveau de vibration à une fréquence particulière de ladite au moins une machine tournante M1, M2, M3 à un disfonctionnement connu, lequel manifeste habituellement le même niveau de vibration à cette fréquence particulière.

A titre d'exemple, il est connu en analyse fréquentielle vibratoire des machines tournantes qu'un défaut de balourd sur une pièce tournante se traduira, en tant que symptôme, par une vibration importante de la pièce tournante à la fréquence fondamentale (et aux harmoniques) de rotation de ladite pièce tournante. Le moyen d'interprétation 20 pourra mettre en oeuvre une algorithmique d'association 2 permettant d'effectuer une telle analyse, le défaut de balourd étant alors un état de fonctionnement connu. L'exécution de l'algorithmique d'association 2 peut, le cas échéant, entraîner une détection d'un niveau important de vibrations aux fréquences fondamentales et harmoniques de rotation de composants fonctionnels de ladite au moins une machine tournante M1, M2, M3 à l'aide d'une analyse fréquentielle des valeurs brutes 6. Dans cet exemple, cela permet ainsi au moyen d'interprétation 20 d'interpréter l'état de fonctionnement comme correspondant à l'état de fonctionnement connu de type défaut de balourd, en ce qui concerne en particulier les composants fonctionnels. Bien entendu, l'algorithmique d'association 2 pourra être conçue pour associer tout type d'état de fonctionnement connu au type d'état de fonctionnement de manière similaire au cas du défaut de balourd.

L'exécution d'une analyse temporelle peut, quant à elle, permettre par exemple au moyen d'interprétation 20 de déterminer l'évolution progressive d'un paramètre fonctionnel témoignant de l'usure d'une pièce (par exemple si la température ou la vibration de celle-ci augmente au cours du temps), l'interprétation comprenant l'association de ce type d'évolution à un état de fonctionnement connu pour la génération du diagnostic Dc. De même, l'apparition de chocs au court du temps peut également permettre par exemple au moyen d'interprétation 20 de conclure à la casse ou à l'obsolescence de certains composants fonctionnels.

Préférentiellement, l'algorithmique d'association 2 comprend un module de comparaison 2C permettant de comparer les valeurs brutes 6 à des valeurs de seuil de la base de données d'états 2B, les valeurs de seuil correspondant à la pluralité d'états de fonctionnement connus, le module d'association 2A permettant d'associer l'état de fonctionnement à l'un des états de fonctionnement connus.

Les valeurs de seuil peuvent être des valeurs brutes 6 dudit au moins un paramètre que l'on obtient de manière typique, classique, ou systématique pour un état de fonctionnement connu donné. Par exemple, une température trop élevée par rapport à une valeur de seuil de température pourra être symptomatique d'un manque de lubrification.

Ainsi, lorsqu'une valeur de seuil est franchie par l'une des valeurs brutes 6 de l'un des paramètres fonctionnels témoignant de l'état de fonctionnement (par exemple une sur-température, une accélération anormalement élevée d'un accéléromètre, ou encore une vitesse anormalement basse d'un composant fonctionnel), le module d'association 2A est en mesure d'associer un tel état de fonctionnement à un état de fonctionnement connu.

Bien entendu, l'algorithmique d'association 2 pourra comporter à la fois un module d'analyse 2D temporelle et / ou fréquentielle, et un module de comparaison 2C, et combiner l'utilisation de ces différents modules entre eux pour obtenir l'interprétation des valeurs brute la plus fidèle à la réalité possible, et la génération du meilleur diagnostic Dc possible, ou au moins la plus fidèle possible à celui que serait en mesure d'obtenir un utilisateur disposant de compétences lui permettant de générer le diagnostic Dc.

De préférence, l'analyse, qu'elle soit temporelle et / ou fréquentielle, et / ou de comparaison 2C peut également permettre au moyen d'interprétation 20 de générer un diagnostic Dc prédictif de l'état de fonctionnement futur de ladite au moins une machine tournante M1, M2, M3, à partir de l'état de fonctionnement de ladite au moins une machine tournante M1, M2, M3, en se basant sur les valeurs brutes 6 des paramètres de fonctionnement pour évaluer des conséquences futures d'un comportement présent desdits paramètres de fonctionnement. Ainsi, le système 100 d'aide au diagnostic peut permettre avantageusement de prédire l'usure, l'obsolescence ou la dégradation de certains composants fonctionnels, ce qui peut permettre de recourir à un procédé de maintenance prédictive pour entretenir ladite au moins une machine tournante M1, M2, M3 avant qu'une panne ou qu'un disfonctionnement ne se produise.

Dans le cas du calcul du rendement aéraulique décrit ci-avant, le module de comparaison 2C pourra être conçu pour comparer le rendement aéraulique calculé à une valeur de seuil, en deçà de laquelle le moto-ventilateur est considéré comme présentant un défaut particulier. De cette façon, le moyen d'interprétation 20 peut générer automatiquement un diagnostic renseignant sur le fonctionnement du moto-ventilateur sur la base de la valeur de rendement aéraulique calculée.

De manière préférentielle, le système 100 d'aide au diagnostic comprend un ordinateur embarqué 11, le moyen d'interprétation 20 se présentant sous la forme d'un logiciel d'exploitation 12 chargé sur l'ordinateur embarqué 11, pour exécuter l'algorithmique d'association 2 (tel qu'illustré à la figure 1). L'ordinateur embarqué 11 est donc solidaire du support de base 50, et est de préférence placé à l'intérieur du boîtier, tel qu'illustré à la figure 3. L'ordinateur embarqué 11 se présente par exemple sous la forme d'un ordinateur industriel, et comporte par exemple de manière classique une mémoire depuis laquelle le logiciel d'exploitation 12 est destiné à être exécuté, un processeur pour exécuter ledit logiciel d'exploitation 12, et une carte de communication permettant de communiquer par exemple avec le moyen de réception 10. Le moyen de réception 10 peut alors se présenter de préférence sous la forme d'un périphérique de l'ordinateur embarqué 11, sous la forme par exemple d'une carte d'entrée analogique, conçue pour recevoir des signaux S1, S2, S3 analogiques des capteurs SA1, SA2, SA3 afin de les convertir en signaux numériques lisibles par ledit ordinateur embarqué 11 par l'intermédiaire de sa carte de communication.

Préférentiellement, et de manière alternative, l'ordinateur embarqué 11 peut intégrer à la fois le moyen d'interprétation 20 et le moyen de réception 10 en tant que périphérique intégré.

De façon préférentielle, le système 100 d'aide au diagnostic comprend un dispositif d'interface 31 permettant à un utilisateur d'accéder au diagnostic Dc, le dispositif d'interface 31 comprenant un écran local 31A conçu pour afficher une interface interactive 30 et disposé sur ledit boîtier de manière à ce qu'un utilisateur puisse y accéder sans déverrouiller ledit boîtier.

L'écran local 31A est donc de préférence placé en façade du boîtier, mais peut alternativement être placé dans le boîtier à condition de rester visible sans nécessiter le déverrouillage du boîtier, par exemple à travers une fenêtre protectrice.

Le dispositif d'interface 31 permet donc d'afficher l'interface interactive 30 sur l'écran local 31A, laquelle traduit le diagnostic Dc d'une manière lisible par l'utilisateur, à l'aide de l'écran.

De préférence, l'écran local 31A est un écran tactile permettant à la fois d'afficher l'interface interactive 30 et de former un moyen d'action 31 B obtenu par la caractéristique de tactilité de l'écran tactile, permettant à l'utilisateur d'agir sur l'interface interactive 30, et en particulier sur la visualisation du diagnostic Dc, par exemple en cliquant sur des éléments de ladite interface interactive 30. Bien entendu, le dispositif d'interface 31 peut alternativement comprendre un écran non tactile, le dispositif d'interface 31 comprenant alors de préférence en tant que moyen d'action 31B un dispositif de pointage de type souris, et / ou un clavier. Bien entendu, le dispositif d'interface 31, l'écran local 31A et le moyen d'action 31B pourront se présenter sous toute forme connue permettant à l'utilisateur de visualiser l'interface interactive 30 (et donc le diagnostic Dc) et préférentiellement d'agir sur ladite interface interactive 30, et en particulier sur la visualisation dudit diagnostic Dc. Bien entendu, le dispositif d'interface 31 peut alternativement ne comprendre aucun moyen d'action 31B, de manière à ce que l'utilisateur ne puisse pas intervenir sur l'interface interactive 30, et ne puisse que visualiser le diagnostic Dc.

De préférence, l'interface interactive 30 affiche une illustration schématique 30A de ladite au moins une machine tournante M1, M2, M3 (tel qu'illustré à la figure 2), sur laquelle sont illustrés les composants fonctionnels, ceux-ci étant associés au sein de l'interface interactive 30 avec des représentations symboliques 30B de leur état de fonctionnement.

L'illustration schématique 30A comprend de préférence l'illustration de l'emplacement sur ladite au moins une machine tournante M1, M2, M3 des composants fonctionnels, apparaissant au sein de l'interface interactive 30 10 (tel qu'illustré à la figure 2).

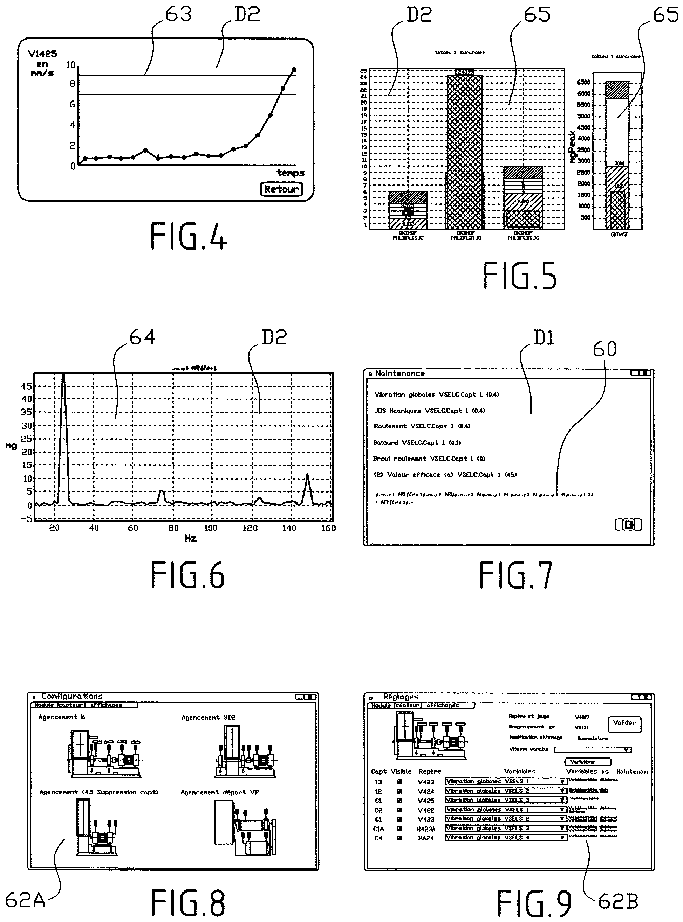

Les représentations symboliques 30B consistent par exemple en l'affichage de valeurs sur des jauges, l'affichage des feux tricolores représentant l'état de fonctionnement de ladite au moins une machine tournante M1, M2, M3, ou simplement l'affichage des valeurs brutes 6 de paramètres de fonctionnement associés auxdits composants fonctionnels. Le diagnostic Dc, incluant des informations sur l'état de fonctionnement, est affiché par l'intermédiaire de l'interface interactive 30, sous la forme par exemple d'un message de diagnostic 60 (le message de diagnostic 60 contenant une description d'un ou plusieurs disfonctionnements, et /ou les actions à mener pour y remédier, tel qu'illustré à la figure 7), d'un symbole (un feu tricolore 61 dont le rouge indique un disfonctionnement critique, le feu jaune indique un événement à surveiller, le feu vert indique l'absence de problème), inclus ou combinés avec l'illustration schématique 30A et les représentations symboliques 30B.

De préférence, l'interface interactive 30 permet d'afficher l'illustration schématique 30A de plusieurs machines tournantes à la fois, ou en parallèle, de même type ou de type différent, avantageusement en fonction du nombre de machines tournantes reliées audit moyen de réception 10. L'interface interactive 30 comprend de préférence un premier et/ou un deuxième écran de configuration 62A, 62B, le premier écran de configuration 62A permettant à l'utilisateur de renseigner le nombre de machines tournantes connectées au moyen de réception et leur nature (ou le nombre de machines tournantes à visualiser sur l'interface interactive 30), le deuxième écran de configuration 62B permettant à l'utilisateur de configurer le nombre, la nature, et les propriétés des signaux S1, S2, S3 et préférentiellement des capteurs SA1, SA2, SA3 connectés au moyen de réception 10 (tel qu'illustré aux figures 8 et 9).

De préférence, si le diagnostic Dc fait état d'un disfonctionnement, d'un défaut imminent, ou d'une urgence quelconque, le dispositif d'interface 31 est conçu pour émettre une alarme afin d'attirer l'attention de l'utilisateur. L'alarme pourra bien entendu de préférence être conçue pour se déclencher (et éventuellement être réglable) en fonction de la gravité du diagnostic Dc.

De préférence, le dispositif d'interface 31 comprend des signaux lumineux 51 symbolisant le diagnostic Dc (par exemple une couleur jaune pour un événement à surveiller, une couleur rouge pour un disfonctionnement critique), disposés par exemple sur le toit du boîtier, permettant d'attirer l'attention de l'utilisateur, avantageusement par exemple lorsque l'écran est éteint, ou en cas de défaut important. Préférentiellement, les signaux lumineux 51 sont conçus pour être actifs en cas d'alarme.

Le dispositif d'interface 31 comprend préférentiellement en outre un moyen d'émission d'un signal sonore activé selon le type de diagnostic Dc généré. Préférentiellement, le signal sonore est émis en cas d'alarme.

De préférence, l'interface interactive 30 permet à l'utilisateur d'accéder à des niveaux de diagnostic D1, D2 distincts.

Préférentiellement, l'interface interactive 30 permet à l'utilisateur d'accéder à des niveaux de diagnostic D1, D2 distincts, comprenant au moins :
- un premier niveau de diagnostic D1 dans lequel l'utilisateur peut accéder au diagnostic et lire directement l'état de fonctionnement,
- un deuxième niveau de diagnostic D2 dans lequel l'utilisateur peut accéder aux valeurs brutes 6.

De préférence, l'interface interactive 30 comprend au moins un premier niveau de diagnostic D1 dans lequel l'utilisateur peut accéder au diagnostic Dc et lire directement l'état de fonctionnement. De préférence, la génération du diagnostic Dc comprend une association de l'état de fonctionnement à un message de diagnostic 60 (tel qu'illustré à la figure 7) comprenant des commentaires, et/ou un conseil destiné à l'utilisateur, le message de diagnostic 60 étant destiné à être affiché dans le premier niveau de diagnostic D1. Ainsi, dans le premier niveau de diagnostic D1, le diagnostic Dc et l'état de fonctionnement affichés sont associés à des commentaires sur ledit état de fonctionnement, comme par exemple des informations sur un disfonctionnement de ladite au moins une machine tournante M1, M2, M3, des informations sur des actions de maintenance à entreprendre pour pérenniser l'état de fonctionnement diagnostiqué de ladite au moins une machine tournante M1, M2, M3, des informations pour permettre à l'utilisateur de contacter un autre utilisateur dont le niveau de compétence permet d'effectuer la maintenance de la machine en fonction de l'état de fonctionnement diagnostiqué.

De préférence, l'interface interactive 30 comprend au moins un deuxième niveau de diagnostic D2 dans lequel l'utilisateur peut accéder aux valeurs brutes 6, optionnellement mises en forme sous la forme d'un graphe temporel 63 (tel qu'illustré à la figure 4), d'un graphe fréquentiel 64 (tel qu'illustré à la figure 6), d'un histogramme 65 (notamment pour l'analyse de chocs, tel qu'illustré à la figure 5) ou d'un tableau de valeurs brutes 6, afin notamment de permettre à l'utilisateur, s'il possède les compétences nécessaires, d'effectuer lui-même une interprétation desdites valeurs brutes 6 et la génération d'un diagnostic Dc, afin par exemple de confronter sa propre interprétation à l'interprétation automatique effectuée par le système 100, ou de se faire sa propre opinion sur l'état de fonctionnement. De préférence, le deuxième niveau de diagnostic D2 comprend également un panneau de commande permettant à l'utilisateur d'agir sur des paramètres de fonctionnement de ladite au moins une machine tournante M1, M2, M3, par exemple pour corriger un disfonctionnement ou effectuer des actions de maintenance. Dans ce cas, le système 100 d'aide au diagnostic sera par exemple relié à ladite au moins une machine tournante M1, M2, M3 de manière à être en mesure de commander des composants fonctionnels prédéterminés, en envoyant des ordres SO1, SO2 à ladite au moins une machine tournante M1, M2, M3.

Dans le cas d'exemple d'un calcul du rendement aéraulique décrit ci-avant, le deuxième niveau de diagnostic pourra en particulier comprendre un affichage sur un graphe temporel en direct représentant les valeurs brutes captées, voire le rendement aéraulique calculé. Dans ce cas d'exemple, le premier niveau de diagnostic pourra par exemple comprendre un affichage du diagnostic fournir par le moyen d'interprétation 20 sur la base du calcul du rendement aéraulique.

Préférentiellement, l'accès d'un utilisateur aux niveaux de diagnostic D1, D2 est régi par un système de droits d'accès, autorisant ou bloquant l'accès de façon prédéterminée à certains desdits niveaux de diagnostic D1, D2 en fonction des droits d'accès de l'utilisateur.

Le système de droits d'accès peut se présenter sous !a forme d'un mécanisme d'authentification dans lequel l'utilisateur est contraint de s'identifier (à l'aide par exemple d'un identifiant et d'un mot de passe, d'un badge magnétique, et / ou biométrique) pour accéder à un niveau de diagnostic D1, D2 donné. Ainsi, de préférence, un utilisateur dit « *expérimenté* » pourra accéder à l'ensemble des niveaux de diagnostic D1, D2 quand il le souhaite, incluant le deuxième niveau. De préférence, un utilisateur « *non expérimenté* » ne pourra accéder qu'au premier niveau de diagnostic D1, et ne pourra notamment pas accéder aux écrans de configuration 62A, 62B.

De manière préférentielle, le système 100 d'aide au diagnostic comprend un dispositif distant 40 de diagnostic conçu pour communiquer à distance avec le moyen d'interprétation 20 et/ou le moyen de réception 10 afin de récupérer le diagnostic Dc d'état de fonctionnement et/ou de réceptionner les valeurs brutes 6 dudit au moins un paramètre de fonctionnement, afin d'éventuellement effectuer une interprétation de ces derniers.

Le dispositif distant 40 peut de préférence comporter un moyen d'interprétation et/ou un moyen de réception et/ou un moyen d'interface, semblables à ceux précédemment décrits.

Le dispositif distant 40 de diagnostic peut se présenter sous la forme d'un poste distant connecté à l'ordinateur embarqué 11 par une liaison à distance en réseau. Dès lors, l'ordinateur embarqué 11 est équipé d'un moyen de communication avec le réseau, par exemple un port Ethernet ou WIFI, et communiquer à l'aide d'une liaison OPC. De préférence, le poste distant peut permettre avantageusement de prendre la main sur l'ordinateur embarqué 11.

L'invention concerne, selon un deuxième aspect, un procédé d'aide au diagnostic de l'état de fonctionnement d'au moins une machine tournante M1, M2, M3 industrielle, du genre ventilateur ou pompe rotative, formée par un groupe moto-ventilateur industriel comprenant un moteur et une hélice de ventilation entraînée en rotation par ledit moteur, ou par un groupe motopompe industriel comprenant une roue de pompage. Ledit procédé d'aide au diagnostic comporte une étape de réception de signaux S1, S2, S3 représentatifs de valeurs brutes 6 d'au moins un paramètre de fonctionnement de ladite au moins une machine tournante M1, M2, M3, les valeurs brutes 6 étant captées au sein de ladite au moins une machine tournante M1, M2, M3, le procédé étant caractérisé en ce qu'il comporte également une étape d'interprétation automatique des valeurs brutes 6 réceptionnées et une étape de génération d'un diagnostic Dc de l'état de fonctionnement de ladite au moins une machine tournante M1, M2, M3 en fonction desdites valeurs brutes 6.

On réceptionne ainsi les signaux S1, S2, S3 à l'aide du moyen de réception 10, lequel décode lesdits signaux S1, S2, S3 afin d'en extraire les valeurs brutes 6 dudit au moins un paramètre de fonctionnement de ladite au moins une machine tournante M1, M2, M3. Ensuite, le moyen de réception 10 mémorise et/ou transmet les valeurs brutes 6 au moyen d'interprétation 20, qui se charge d'interpréter automatiquement lesdites valeurs brutes 6 afin d'être en mesure générer le diagnostic Dc d'état de fonctionnement de ladite au moins une machine tournante M1, M2, M3.

De préférence, l'étape d'interprétation automatique comprend une sous-étape d'association de l'état de fonctionnement à un état de fonctionnement connu.

Pour effectuer l'interprétation, le moyen d'interprétation 20 procède de préférence à une analyse des valeurs brutes 6, puis à une comparaison des résultats de l'analyse à des comportements connus de ladite au moins une machine tournante M1, M2, M3, c'est-à-dire à des états de fonctionnement connus. Une telle comparaison permet ainsi au moyen d'interprétation 20 d'établir des similitudes entre l'état de fonctionnement et au moins un des états de fonctionnement qu'il connaît déjà. Ainsi, dans le cas où le moyen d'interprétation 20 établit effectivement une similitude entre l'état de fonctionnement et l'un des états de fonctionnement connus, il en déduit que l'état de fonctionnement est l'état de fonctionnement connu similaire.

Préférentiellement, la sous-étape d'association comprend :
- l'exécution d'une analyse temporelle et/ou fréquentielle des valeurs brutes 6 dudit au moins un paramètre de fonctionnement, laquelle permet d'obtenir un résultat d'analyse reflétant l'état de fonctionnement,
- l'exécution d'une comparaison du résultat d'analyse à des modèles de résultats correspondant à une pluralité d'états de fonctionnement connus, afin d'associer l'état de fonctionnement à l'un des états de fonctionnement connus.

Ainsi, le moyen d'interprétation 20 effectue l'analyse des valeurs brutes 6, de préférence en analysant le comportement temporel et/ou fréquentiel desdites valeurs brutes 6, ce qui lui permet d'identifier des symptômes témoignant de l'état de fonctionnement de ladite au moins une machine tournante M1, M2, M3, ces symptômes pouvant être signes d'un état de fonctionnement connu. Le moyen d'interprétation 20 peut ainsi comparer le résultat de l'analyse qu'il a effectué avec des modèles de résultats d'analyse. Les modèles de résultat d'analyse reflétant des résultats d'analyse qui auraient été théoriquement obtenus en analysant des valeurs brutes 6 d'un état de fonctionnement connu, le moyen d'interprétation 20 peut faire le lien entre l'état de fonctionnement de ladite au moins une machine tournante M1, M2, M3 et au moins un état de fonctionnement connu d'un machine tournante théorique.

Alternativement ou conjointement à une analyse temporelle et/ou fréquentielle, la sous-étape d'association comprend de préférence l'exécution d'une comparaison des valeurs brutes 6 à des valeurs de seuil associées à une pluralité d'états de fonctionnement connus, afin d'associer l'état de fonctionnement l'un des états de fonctionnement connus. Dans cette méthode d'interprétation, le moyen d'interprétation 20 vérifie si les valeurs brutes 6 dépassent (ou ne dépassent pas) des valeurs de seuil, dont le dépassement (ou le non dépassement) traduit un état de fonctionnement connu, que le moyen d'interprétation 20 peut alors se charger d'associer à l'état de fonctionnement de ladite au moins une machine tournante M1, M2, M3.

De préférence, le procédé comprend une étape d'accès par un utilisateur à des niveaux de diagnostic D1, D2 distincts, comprenant au moins :
- un premier niveau de diagnostic D1 dans lequel l'utilisateur accède au diagnostic Dc et lit directement l'état de fonctionnement,
- un deuxième niveau de diagnostic D2 dans lequel l'utilisateur accède aux valeurs brutes 6.

Préférentiellement, le procédé comprend également une étape d'authentification de l'utilisateur afin de lui autoriser ou de lui bloquer l'accès à certains desdits niveaux de diagnostic D1, D2 en fonction de droits d'accès dudit utilisateur.

Ainsi, lorsque l'utilisateur désire connaître l'état de fonctionnement de ladite au moins un machine tournante M1, M2, M3, il s'authentifie dans l'interface interactive 30 depuis le dispositif d'interface 31, en entrant par exemple ses identifiants et son mot de passe à l'aide du moyen d'action 31B, se présentant par exemple sous la forme d'un clavier et d'une souris, ou d'un écran tactile. L'utilisateur accède alors au premier niveau de diagnostic D1 sur lequel il peut lire directement l'état de fonctionnement diagnostiqué de ladite au moins une machine tournante M1, M2, M3, celui-ci étant par exemple illustré sur l'écran local 31A à l'aide d'une illustration schématique 30A de ladite au moins une machine tournante M1, M2, M3 incluant de préférence des représentations symboliques 30B de composants fonctionnels de ladite au moins une machine tournante M1, M2, M3, lesquels sont associés à leur état de fonctionnement. L'une des représentations symboliques 30B de l'état de fonctionnement se présente par exemple sous la forme d'un feu tricolore 61 renseignant sur l'état d'un composant fonctionnel donné représenté.

A titre d'exemple :
- lorsque le feu tricolore 61 est rouge, le composant fonctionnel présente un problème critique de fonctionnement, de sorte qu'une action de maintenance est nécessaire pour résoudre ledit problème critique,
- lorsque le feu tricolore 61 est jaune, le composant fonctionnel est à surveiller, car il existe un risque que ledit composant fonctionnel présente un problème critique de manière imminente,
- lorsque le feu tricolore 61 est vert, le composant ne nécessite pas d'être surveillé.

De préférence, pour le premier niveau de diagnostic D1, s'affiche également à proximité des composants fonctionnels représentés et en direct certaines valeurs brutes 6 considérées comme importantes.

Si son droit d'accès le lui autorise, l'utilisateur a le choix de cliquer (par l'intermédiaire du moyen d'action 31B) sur l'un des composants fonctionnel afin d'obtenir plus de détails sur l'état de fonctionnement diagnostiqué. S'affiche alors un écran comportant par exemple des détails sur l'état de fonctionnement, un message de diagnostic 60 comprenant des conseils sur les actions de maintenance à effectuer, et/ou comprenant l'identification d'une personne à contacter pour effectuer lesdites actions de maintenance (tel qu'illustré à la figure 7).

Préférentiellement, si son droit d'accès le lui autorise, l'utilisateur peut également accéder au deuxième niveau de diagnostic D2, dans lequel les valeurs brutes 6 des paramètres de fonctionnement peuvent être affichées sous forme d'un graphe temporel 63, d'un graphe fréquentiel 64, ou d'un histogramme 65 (tel qu'illustré aux figures 4, 5 et 6) afin que l'utilisateur soit en mesure d'interpréter les valeurs brutes 6 par lui-même si son niveau de compétence le lui permet.

De préférence, si son droit d'accès le lui autorise, l'utilisateur peut commander la modification de certains paramètres de fonctionnement (comme par exemple une vitesse de rotation de l'arbre, dans le cas où ladite au moins une machine tournante M1, M2, M3 est un moto-ventilateur industriel) depuis le dispositif d'interface 31, afin par exemple d'ajuster ou de corriger l'état de fonctionnement, et de résoudre éventuellement un disfonctionnement. L'utilisateur envoie alors des ordres SO1, SO2 à ladite au moins une machine tournante M1, M2, M3 depuis l'interface interactive 30.

De préférence en outre, le système 100 d'aide au diagnostic est conçu pour que l'utilisateur soit en mesure d'effectuer depuis le dispositif distant 40 de diagnostic tout ou partie des actions qu'il effectuerait depuis le dispositif d'interface 31.

L'invention concerne en outre un logiciel d'exploitation 12 permettant d'effectuer les étapes d'interprétation automatique et de génération du diagnostic Dc du procédé d'aide au diagnostic décrits ci-avant. Pour cela, il comprend de préférence l'algorithmique d'association 2 et est de préférence chargé sur l'ordinateur embarqué 11. Le logiciel d'exploitation 12 comprend de préférence également la gestion de l'affichage de l'interface interactive 30. Le logiciel d'exploitation 12 est également de préférence exécutable sur le dispositif distant 40 de diagnostic.

L'invention concerne enfin un support pouvant être lu par un ordinateur et sur lequel est enregistré le logiciel d'exploitation 12 décrit ci-avant, le logiciel d'exploitation 12 permettant d'effectuer les étapes d'interprétation automatique et de génération du diagnostic Dc du procédé d'aide au diagnostic. A titre d'exemples non limitatifs, ce support pourra être une clé USB, un CD, ou un serveur, ou tout support hébergeant un moyen d'installer ou d'exécuter le logiciel en local ou à distance.

### POSSIBILITE D'APPLICATION INDUSTRIELLE

L'invention trouve son application industrielle dans la conception, la réalisation, et la mise en œuvre de systèmes d'aide au diagnostic, en particulier dans un contexte de maintenance industrielle pour des machines tournantes du genre groupes moto-ventilateurs ou groupes motopompes.

## Revendications

1. Système (100) d'aide au diagnostic de l'état de fonctionnement d'au moins une machine tournante (M1, M2, M3) industrielle formée par un groupe moto-ventilateur industriel comprenant un moteur et une hélice de ventilation entraînée en rotation par ledit moteur, ou par un groupe motopompe industriel comprenant une roue de pompage, ledit système (100) d'aide au diagnostic comprenant un support de base (50) et un moyen de réception (10) de signaux (S1, S2, S3) solidaire du support de base (50), le moyen de réception (10) de signaux (S1, S2, S3) étant conçu pour réceptionner des signaux (S1, S2, S3) représentatifs de valeurs brutes (6) d'au moins un paramètre de fonctionnement de ladite au moins une machine tournante (M1, M2, M3), les valeurs brutes (6) étant captées au sein de ladite au moins une machine tournante (M1, M2, M3), le système (100) comprenant également un moyen d'interprétation (20) de l'état de fonctionnement conçu pour interpréter automatiquement les valeurs brutes (6) réceptionnées et pour générer un diagnostic (Dc) de l'état de fonctionnement de ladite au moins une machine tournante (M1, M2, M3) en fonction desdites valeurs brutes (6), **caractérisé en ce que** le support de base (50) comprend un boîtier, le moyen de réception (10) des signaux (S1, S2, S3) étant placé à l'intérieur dudit boîtier, le système d'aide au diagnostic comprenant un dispositif d'interface (31) permettant à un utilisateur d'accéder au diagnostic (Dc), le dispositif d'interface (31) comprenant un écran local (31A) conçu pour afficher une interface interactive (30), l'écran local (31A) étant disposé sur ledit boîtier ou dans le boîtier, l'interface interactive (30) permettant à l'utilisateur d'accéder à des niveaux de diagnostic (D1, D2) distincts, comprenant au moins :
- un premier niveau de diagnostic (D1) dans lequel l'utilisateur peut accéder au diagnostic et lire directement l'état de fonctionnement,
- un deuxième niveau de diagnostic (D2) dans lequel l'utilisateur peut accéder aux valeurs brutes (6).

2. Système (100) d'aide au diagnostic selon la revendication précédente, **caractérisé en ce que** le moyen d'interprétation (20) comprend un moyen de calcul du rendement aéraulique de la machine tournante (M1, M2, M3).

3. Système (100) d'aide au diagnostic selon la revendication 1 ou 2, caractérisé en ce en ce qu'il comprend une algorithmique d'association (2) et une base de données d'états (2B) comprenant une pluralité d'états de fonctionnement connus, l'algorithmique d'association (2) comportant un module d'association (2A) permettant d'associer l'état de fonctionnement à l'un des états de fonctionnement connus de la base de données d'états (2B), l'algorithmique d'association (2) comprenant en outre un module de comparaison (2C) permettant de comparer les valeurs brutes (6) à des valeurs de seuil de la base de données d'états (2B), les valeurs de seuil correspondant à la pluralité d'états de fonctionnement connus, le module d'association (2A) permettant d'associer l'état de fonctionnement à l'un des états de fonctionnement connus.

4. Système (100) d'aide au diagnostic selon les revendications 2 et 3, **caractérisé en ce que** la machine tournante (M1, M2, M3) est formée par un groupe moto-ventilateur, et **en ce que** le module de comparaison (2C) est conçu pour comparer le rendement aéraulique calculé à une valeur de seuil, en deçà de laquelle le moto-ventilateur est considéré comme présentant un défaut particulier, le moyen d'interprétation (20) générant automatiquement un diagnostic renseignant sur le fonctionnement du moto-ventilateur sur la base de la valeur de rendement aéraulique calculée.

5. Système (100) d'aide au diagnostic selon l'une quelconque des revendications précédentes, **caractérisé en ce que** le moyen d'interprétation (20) est conçu pour interpréter les valeurs brutes (6) de paramètres de fonctionnement de type vitesse et/ou accélération et/ou vibrations et/ou température et/ou couple et/ou force et/ou mesure acoustique d'un ou plusieurs composants fonctionnels de ladite au moins une machine tournante (M1, M2, M3).

6. Système (100) d'aide au diagnostic selon la revendication 3 et optionnellement l'une des revendications 4 et 5, **caractérisé en ce qu'**il comprend un ordinateur embarqué (11), le moyen d'interprétation (20) se présentant sous la forme d'un logiciel d'exploitation (12) chargé sur l'ordinateur embarqué (11), pour exécuter l'algorithmique d'association (2).

7. Système (100) d'aide au diagnostic selon l'une quelconque des revendications précédentes, **caractérisé en ce que** le boîtier est du genre armoire ou coffret, et est conçu pour être fermé et verrouillé à l'aide d'une porte (51) dudit boîtier, ledit moyen d'interprétation (20) étant placé à l'intérieur dudit boîtier.

8. Système (100) d'aide au diagnostic selon l'une des revendications précédentes, **caractérisé en ce que** l'écran local (31A) est disposé sur ledit boîtier de manière à ce qu'un utilisateur puisse y accéder sans déverrouiller ledit boîtier, lequel écran local est de préférence un écran tactile.

9. Système (100) d'aide au diagnostic selon l'une quelconque des revendications précédentes, **caractérisé en ce que** l'accès d'un utilisateur aux niveaux de diagnostic (D1, D2) est régi par un système de droits d'accès, autorisant ou bloquant l'accès de façon prédéterminée à certains desdits niveaux de diagnostic (D1, D2) en fonction des droits d'accès de l'utilisateur.

10. Système (100) d'aide au diagnostic selon l'une quelconque des revendications 1 à 9, **caractérisé en ce qu'**il comprend un dispositif distant (40) de diagnostic conçu pour communiquer à distance avec le moyen d'interprétation (20) et/ou le moyen de réception (10) afin de récupérer le diagnostic (Dc) d'état de fonctionnement et/ou de réceptionner les valeurs brutes (6) dudit au moins un paramètre de fonctionnement.

11. Système (100) d'aide au diagnostic selon l'une quelconque des revendications 1 à 10, **caractérisé en ce que** le moyen de réception (10) comprend des ports (1A) de réception conçus pour recevoir les signaux (S1, S2, S3) et pour en extraire les valeurs brutes (6), le moyen de réception (10) comprenant également une mémoire (1B) dans laquelle les valeurs brutes (6) reçues sur une durée prédéterminée sont mémorisées, le moyen d'interprétation (20) étant conçu pour exploiter des valeurs brutes (6) reçues sur une durée prédéterminée, lesdits ports étant de préférence aptes à recevoir les signaux (S1, S2, S3) sous la forme de signaux électriques ou électromagnétiques émis par des capteurs (SA1, SA2, SA3) disposés au sein de ladite au moins une machine tournante (M1, M2, M3).

12. Système (100) d'aide au diagnostic selon l'une quelconque des revendications 1 à 11, **caractérisé en ce que** le moyen de réception (10) comporte un nombre suffisant de ports (1A) pour recevoir les valeurs brutes (6) d'un ou plusieurs paramètres de fonctionnement, de préférence un à six paramètres de fonctionnement, d'une ou plusieurs machines tournantes industrielles, de préférence d'une à quatre machine(s) tournante(s) industrielle(s).

13. Procédé d'aide au diagnostic de l'état de fonctionnement d'au moins une machine tournante (M1, M2, M3) industrielle formée par un groupe moto-ventilateur industriel comprenant un moteur et une hélice de ventilation entraînée en rotation par ledit moteur, ou par un groupe motopompe industriel comprenant une roue de pompage, ledit procédé d'aide au diagnostic comportant une étape de réception de signaux (S1, S2, S3) à l'aide d'un moyen de réception (10) solidaire d'un support de base (50) comprenant un boîtier, le moyen de réception (10) des signaux (S1, S2, S3) étant placé à l'intérieur dudit boîtier, lesdits signaux étant représentatifs de valeurs brutes (6) d'au moins un paramètre de fonctionnement de ladite au moins une machine tournante (M1, M2, M3), les valeurs brutes (6) étant captées au sein de ladite au moins une machine tournante (M1, M2, M3), le procédé comportant également une étape d'interprétation automatique des valeurs brutes (6) réceptionnées et une étape de génération d'un diagnostic (Dc) de l'état de fonctionnement de ladite au moins une machine tournante (M1, M2, M3) en fonction desdites valeurs brutes (6), ledit procédé étant **caractérisé en ce qu'**il comprend en outre une étape d'accès par un utilisateur à des niveaux de diagnostic (D1, D2) distincts via une interface interactive (30) affichée par un écran local (31A) disposé sur ledit boîtier ou dans ledit boîtier, comprenant au moins :
- un premier niveau de diagnostic (D1) dans lequel l'utilisateur accède au diagnostic et lit directement l'état de fonctionnement,
- un deuxième niveau de diagnostic (D2) dans lequel l'utilisateur accède aux valeurs brutes (6).

14. Procédé d'aide au diagnostic selon la revendication 13, **caractérisé en ce que** l'étape d'interprétation automatique comprend une sous-étape d'association de l'état de fonctionnement à un état de fonctionnement connu.

15. Procédé d'aide au diagnostic selon la revendication 13 ou 14, **caractérisé en ce qu'**il comprend une étape d'authentification de l'utilisateur afin de lui autoriser ou de lui bloquer l'accès à certains desdits niveaux de diagnostic (D1, D2) en fonction de droits d'accès dudit utilisateur.

16. Support pouvant être lu par un ordinateur et sur lequel est enregistré un logiciel d'exploitation (12) **caractérisé en ce que** le logiciel d'exploitation (12) permet d'effectuer les étapes d'interprétation automatique et de génération du diagnostic (Dc) du procédé d'aide au diagnostic selon l'une quelconque des revendications 13 à 15.

17. Ensemble comprenant le système (100) d'aide au diagnostic selon l'une quelconque des revendications 1 à 12, et au moins une machine tournante (M1, M2, M3) industrielle formée par un groupe moto-ventilateur industriel comprenant un moteur et une hélice de ventilation entraînée en rotation par ledit moteur, ou par un groupe motopompe industriel comprenant une roue de pompage.

## Patentansprüche

1. System (100) zur Unterstützung der Diagnose des Betriebszustands mindestens einer industriellen Rotationsmaschine (M1, M2, M3), gebildet aus einem industriellen Lüftersatz, der einen Motor und eine Lüfterschraube, die in Drehung von dem Motor angetrieben wird, umfasst, oder aus einem industriellen Motorpumpenaggregat, das ein Pumpenrad umfasst, wobei das System (100) zur Unterstützung der Diagnose einen Basisträger (50) und ein Mittel zum Empfangen (10) von Signalen (S1, S2, S3), das fest mit dem Basisträger (50) verbunden ist, umfasst, wobei das Mittel zum Empfangen (10) von Signalen (S1, S2, S3) ausgelegt ist, um Signale (S1, S2, S3) zu empfangen, die für Bruttowerte (6) mindestens eines Betriebsparameters der mindestens einen Rotationsmaschine (M1, M2, M3) repräsentativ sind, wobei die Bruttowerte (6) innerhalb der mindestens einen Rotationsmaschine (M1, M2, M3) erfasst werden, wobei das System (100) auch ein Mittel zur Interpretation (20) des Betriebszustands umfasst, das ausgelegt ist, um automatisch die empfangenen Bruttowerte (6) zu interpretieren, und um eine Diagnose (Dc) des Betriebszustands der mindestens einen Rotationsmaschine (M1, M2, M3) in Abhängigkeit von den Bruttowerten (6) zu erzeugen, **dadurch gekennzeichnet, dass** der Basisträger (50) ein Gehäuse umfasst, wobei das Mittel zum Empfangen (10) der Signale (S1, S2, S3) in dem Inneren des Gehäuses platziert ist, wobei das System zur Unterstützung der Diagnose eine Schnittstellenvorrichtung (31) umfasst, die es einem Benutzer erlaubt, auf die Diagnose (Dc) zuzugreifen, wobei die Schnittstellenvorrichtung (31) einen lokalen Bildschirm (31A) umfasst, der ausgelegt ist, um eine interaktive Schnittstelle (30) anzuzeigen, wobei der lokale Bildschirm (31A) auf dem Gehäuse oder in dem Gehäuse angeordnet ist, wobei die interaktive Schnittstelle (30) es einem Benutzer erlaubt, auf unterschiedliche Diagnoseniveaus (D1, D2) zuzugreifen, die mindestens Folgendes umfassen:
- ein erstes Diagnoseniveau (D1), in dem der Benutzer auf die Diagnose zugreifen und den Betriebszustand direkt lesen kann,
- ein zweites Diagnoseniveau (D2), in dem der Benutzer auf die Bruttowerte (6) zugreifen kann.

2. System (100) zur Unterstützung der Diagnose nach dem vorhergehenden Anspruch, **dadurch gekennzeichnet, dass** das Mittel zur Interpretation (20) ein Mittel zum Berechnen des lufttechnischen Ertrags der Rotationsmaschine (M1, M2, M3) umfasst.

3. System (100) zur Unterstützung der Diagnose nach Anspruch 1 oder 2, **dadurch gekennzeichnet, dass** es einen Assoziationsalgorithmus (2) und eine Datenbank von Zuständen (2B) umfasst, die eine Vielzahl bekannter Betriebszustände umfasst, wobei der Assoziationsalgorithmus (2) ein Assoziationsmodul (2A) umfasst, das es erlaubt, den Betriebszustand mit einem der bekannten Betriebszustände der Datenbank von Zuständen (2B) zu assoziieren, wobei der Assoziationsalgorithmus (2) außerdem ein Vergleichsmodul (2C) umfasst, das es erlaubt, die Bruttowerte (6) mit Schwellenwerten der Datenbank von Zuständen (2B) zu vergleichen, wobei die Schwellenwerte der Vielzahl bekannter Betriebszustände entsprechen, wobei es das Assoziationsmodul (2A) erlaubt, den Betriebszustand mit einem der bekannten Betriebszustände zu assoziieren.

4. System (100) zur Unterstützung der Diagnose nach den Ansprüchen 2 und 3, **dadurch gekennzeichnet, dass** die Rotationsmaschine (M1, M2, M3) aus einem Lüftersatz gebildet ist, und dass das Vergleichsmodul (2C) ausgelegt ist, um den berechneten lufttechnischen Ertrag mit einem Schwellenwert zu vergleichen, unter welchem der Motorlüftersatz als einen besonderen Fehler aufweisend betrachtet wird, wobei das Mittel zur Interpretation (20) automatisch eine Diagnose erzeugt, die über den Betrieb des Lüftersatzes auf der Basis des berechneten lufttechnischen Ertragswerts informiert.

5. System (100) zur Unterstützung der Diagnose nach einem der vorhergehenden Ansprüche, **dadurch gekennzeichnet, dass** das Mittel zur Interpretation (20) ausgelegt ist, um die Bruttowerte (6) von Betriebsparametern vom Typ Drehzahl und/oder Beschleunigung und/oder Schwingungen und/oder Temperatur und/oder Drehmoment und/oder Kraft und/oder akustischer Messung eines oder mehrerer Funktionsbestandteile der mindestens einen Rotationsmaschine (M1, M2, M3) zu interpretieren.

6. System (100) zur Unterstützung der Diagnose nach Anspruch 3 und optional nach einem der Ansprüche 4 und 5, **dadurch gekennzeichnet, dass** es einen Bordrechner (11) umfasst, wobei das Mittel zur Interpretation (20) die Form einer Betriebssoftware (12) aufweist, die auf den Bordrechner (11) geladen ist, um den Assoziationsalgorithmus (2) auszuführen.

7. System (100) zur Unterstützung der Diagnose nach einem der vorhergehenden Ansprüche, **dadurch gekennzeichnet, dass** das Gehäuse vom Typ Schrank oder Schrankgehäuse ist und ausgelegt ist, um mit Hilfe einer Tür (51) des Gehäuses verschlossen und verriegelt zu werden, wobei das Mittel zur Interpretation (20) in dem Inneren des Gehäuses platziert ist.

8. System (100) zur Unterstützung der Diagnose nach einem der vorhergehenden Ansprüche, **dadurch gekennzeichnet, dass** der lokale Bildschirm (31A) auf dem Gehäuse derart angeordnet ist, dass ein Benutzer darauf zugreifen kann, ohne das Gehäuse zu entriegeln, wobei der lokale Bildschirm bevorzugt ein berührungsempfindlicher Bildschirm ist.

9. System (100) zur Unterstützung der Diagnose nach einem der vorhergehenden Ansprüche, **dadurch gekennzeichnet, dass** der Zugang eines Benutzers zu den Diagnoseniveaus (D1, D2) von einem Zugangsbefugnissystem geregelt wird, das den Zugang zu bestimmten der Diagnoseniveaus (D1, D2) auf vorbestimmte Art in Abhängigkeit von den Zugangsbefugnissen des Benutzers regelt.

10. System (100) zur Unterstützung der Diagnose nach einem der Ansprüche 1 bis 9, **dadurch gekennzeichnet, dass** es eine Ferndiagnosevorrichtung (40) umfasst, die ausgelegt ist, um auf Entfernung mit dem Mittel zur Interpretation (20) und/oder dem Mittel zum Empfangen (10) zu kommunizieren, um die Betriebszustandsdiagnose (Dc) abzurufen und/oder die Bruttowerte (6) des mindestens einen Betriebsparameters zu empfangen.

11. System (100) zur Unterstützung der Diagnose nach einem der Ansprüche 1 bis 10, **dadurch gekennzeichnet, dass** das Mittel zum Empfangen (10) Empfangsports (1A) umfasst, die ausgelegt sind, um Signale (S1, S2, S3) zu empfangen, und daraus die Bruttowerte (6) zu extrahieren, wobei das Mittel zum Empfangen (10) auch einen Speicher (1B) umfasst, in dem die Bruttowerte (6), die während einer vorbestimmten Dauer empfangen werden, gespeichert werden, wobei das Mittel zur Interpretation (20) ausgelegt ist, um die Bruttowerte (6), die während einer vorbestimmten Dauer empfangen werden, zu interpretieren, wobei die Ports bevorzugt fähig sind, die Signale (S1, S2, S3) in der Form elektrischer oder elektromagnetischer Signale zu empfangen, die von Sensoren (SA1, SA2, SA3), die innerhalb der mindestens einen Rotationsmaschine (M1, M2, M3) angeordnet sind, empfangen werden.

12. System (100) zur Unterstützung der Diagnose nach einem der Ansprüche 1 bis 11, **dadurch gekennzeichnet, dass** das Mittel zum Empfangen (10) eine ausreichende Anzahl von Ports (1A) umfasst, um die Bruttowerte (6) eines oder mehrerer Betriebsparameter, bevorzugt von eins bis sechs Betriebsparametern, von einer oder mehreren industriellen Rotationsmaschinen, bevorzugt von einer bis vier industriellen Rotationsmaschinen, zu empfangen.

13. Verfahren zur Unterstützung der Diagnose des Betriebszustands mindestens einer industriellen Rotationsmaschine (M1, M2, M3), gebildet aus einem industriellen Lüftersatz, der einen Motor und eine Lüfterschraube, die in Drehung von dem Motor angetrieben wird, umfasst, oder von einem industriellen Motorpumpenaggregat, das einen Pumpenrad umfasst, wobei das Verfahren zur Unterstützung der Diagnose einen Schritt des Empfangens von Signalen (S1, S2, S3) mit Hilfe eines Mittels zum Empfangen (10) umfasst, das fest mit einer Trägerbasis (50), die ein Gehäuse umfasst, verbunden ist, wobei das Mittel zum Empfangen (10) der Signale (S1, S2, S3) in dem Inneren des Gehäuses platziert ist, wobei die Signale für Bruttowerte (6) mindestens eines Betriebsparameters der mindestens einen Rotationsmaschine (M1, M2, M3) repräsentativ sind, die Bruttowerte (6) innerhalb der mindestens einen Rotationsmaschine (M1, M2, M3) erfasst werden, wobei das Verfahren auch einen Schritt des automatischen Interpretierens der empfangenen Bruttowerte (6) und einen Schritt des Erzeugens einer Diagnose (Dc) des Betriebszustands der mindestens einen Rotationsmaschine (M1, M2, M3) in Abhängigkeit von den Bruttowerten (6) umfasst, wobei das Verfahren **dadurch gekennzeichnet ist, dass** es außerdem einen Zugangsschritt durch einen Benutzer zu unterschiedlichen Diagnoseniveaus (D1, D2) über eine interaktive Schnittstelle (30) umfasst, die von einem lokalen Bildschirm (31A) angezeigt wird, der auf dem Gehäuse oder in dem Gehäuse angeordnet ist, das mindestens Folgendes umfasst:
- ein erstes Diagnoseniveau (D1), in dem der Benutzer auf die Diagnose zugreift und den Betriebszustand direkt liest,
- ein zweites Diagnoseniveau (D2), in dem der Benutzer auf die Bruttowerte (6) zugreift.

14. Verfahren zur Unterstützung der Diagnose nach Anspruch 13, **dadurch gekennzeichnet, dass** der Schritt der automatischen Interpretation einen Unterschritt zum Assoziieren des Betriebszustands mit einem bekannten Betriebszustand umfasst.

15. Verfahren zur Unterstützung der Diagnose nach Anspruch 13 oder 14, **dadurch gekennzeichnet, dass** es einen Schritt des Authentifizierens des Benutzers umfasst, um diesem den Zugang zu bestimmten der Diagnoseniveaus (D1, D2) in Abhängigkeit von den Zugangsbefugnissen des Benutzers zu gestatten oder zu blockieren.

16. Träger, der von einem Computer gelesen werden kann, und auf dem eine Betriebssoftware (12) aufgezeichnet ist, **dadurch gekennzeichnet, dass** es die Betriebssoftware (12) erlaubt, die automatischen Schritte des Auslegens und Erzeugens der Diagnose (Dc) des Diagnoseunterstützungsverfahrens nach einem der Ansprüche 13 bis 15 auszuführen.

17. Anordnung, die das Diagnoseunterstützungssystem (100) nach einem der Ansprüche 1 bis 12 und mindestens eine industrielle Rotationsmaschine (M1, M2, M3) umfasst, gebildet aus einem industriellen Lüftersatz, der einen Motor und eine Lüfterschraube, die von dem Motor in Drehung angetrieben wird, umfasst, oder aus einem industriellen Motorpumpenaggregat, das ein Pumpenrad umfasst.

## Claims

1. A diagnosis assistance system (100) for diagnosing the operating state of at least one industrial rotary machine (M1, M2, M3) formed by an industrial motor-and-fan unit comprising a motor and a fanwheel driven in rotation by said motor, or by an industrial motor-and-pump unit including a pump wheel, said diagnosis assistance system (100) comprising a base support (50) and reception means (10) for receiving signals (S1, S2, S3), the reception means being secured to the base support (50), the reception means (10) for receiving signals (S1, S2, S3) being designed to receive signals (S1, S2, S3) representative of raw values (6) of at least one operating parameter of said at least one rotary machine (M1, M2, M3), the raw values (6) being picked up within said at least one rotary machine (M1, M2, M3), the system (100) also comprising interpretation means (20) for interpreting the operating state and designed to act automatically to interpret the received raw values (6) and to generate a diagnosis (Dc) about the operating state of said at least one rotary machine (M1, M2, M3) as a function of said raw values (6), **characterized in that** the base support (50) comprises a housing, the means (10) for receiving signals (S1, S2, S3) being placed inside said housing, the diagnosis assistance system including an interface device (31) enabling a user to access the diagnosis (Dc), the interface device (31) having a local screen (31A) designed to display an interactive interface (30), the local screen (31A) being arranged on said housing or inside said housing, said interactive interface (30) enabling the user to access distinct diagnosis levels (D1, D2), comprising at least:
- a first diagnosis level (D1) in which the user can access the diagnosis and read the operating state directly; and
- a second diagnosis level (D2) in which the user can access the raw values (6).

2. A diagnosis assistance system (100) according to claim 1, **characterized in that** the interpretation means (20) includes means for calculating the air flow efficiency of the rotary machine (M1, M2, M3).

3. A diagnosis assistance system (100) according to claim 1 or 2, **characterized in that** the interpretation means (20) include an association algorithm (2) and a state database (2B) containing a plurality of known operating states, the association algorithm (2) including an association module (2A) enabling the operating state to be associated with one of the known operating states of the state database (2B), the association algorithm (2) comprising a comparison module (2C) for comparing the raw values (6) with threshold values of the state database (2B), the threshold values corresponding to the plurality of known operating states, the association module (2A) serving to associate the operating state with one of the known operating states.

4. A diagnosis assistance system (100) according to claims 2 and 3, **characterized in that** the rotary machine (M1, M2, M3) is formed by an industrial motor-and-fan unit, and **in that** the comparison module (2C) is designed to compare the calculated air flow efficiency with a threshold value, below which the motor-and-fan unit is considered as presenting a particular fault, the interpretation means 20 automatically generating a diagnosis about the operation of the motor-and-fan unit on the basis of the calculated air flow efficiency value.

5. A diagnosis assistance system (100) according to any one of the preceding claims, **characterized in that** the interpretation means (20) are designed to interpret the raw values (6) of operating parameters of the speed and/or acceleration and/or vibration and/or temperature and/or torque and/or force and/or sound measurement type for one or more functional components of said at least one rotary machine (M1, M2, M3).

6. A diagnosis assistance system (100) according to claim 3 and optionally one of claims 4 and 5, **characterized in that** it includes an embedded computer (11), the interpretation means (20) being in the form of operating software (12) loaded in the embedded computer (11) to execute the association algorithm (2).

7. A diagnosis assistance system (100) according to any one of the preceding claims, **characterized in that** the housing is of the cabinet or box type, and is designed to be closed and locked using a door (51) of said housing, the interpretation means (20) being placed inside the housing.

8. A diagnosis assistance system (100) according to any one of the preceding claims, **characterized in that** the local screen (31A) is arranged on said housing in such a manner that a user can access it without unlocking said housing, said local screen being preferably a touch screen.

9. A diagnosis assistance system (100) according any one of the preceding claims, **characterized in that** the access of a user to the diagnosis levels (D1, D2) is governed by an access rights system that authorizes or does not authorize access in predetermined manner to certain of said diagnosis levels (D1, D2) as a function of access rights of the user.

10. A diagnosis assistance system (100) according to any one of claims 1 to 9, **characterized in that** it includes a remote diagnosis device (40) designed to communicate remotely with the interpretation means (20) and/or with the reception means (10) in order to receive the diagnosis (Dc) about the operating state and/or to receive the raw values (6) of said at least one operating parameter.

11. A diagnosis assistance system (100) according to any one of claims 1 to 10, **characterized in that** the reception means (10) comprise receive ports (1A) designed to receive the signals (S1, S2, S3) and to extract therefrom the raw values (6), the reception means (10) also including a memory (1B) in which the raw values (6) received over a predetermined duration are stored, the interpretation means (20) being designed to use raw values (6) received over a predetermined duration, said ports being preferably suitable for receiving the signals (S1, S2, S3) in the form of electrical or electromagnetic signals transmitted by sensors (SA1, SA2, SA3) arranged within said at least one rotary machine (M1, M2, M3).

12. A diagnosis assistance system (100) according to any one of claims 1 to 11, **characterized in that** the reception means (10) comprise a sufficient number of ports (1A) to receive the raw values (6) of one or more operating parameters, preferably one to six operating parameters, from one or more industrial rotary machines, preferably one to four industrial rotary machines.

13. A diagnosis assistance method for diagnosing the operating state of at least one industrial rotary machine (M1, M2, M3) formed by an industrial motor-and-fan unit comprising a motor and a fanwheel driven in rotation by said motor, or by an industrial motor-and-pump unit including a pump wheel, said diagnosis assistance method comprising a step of receiving signals (S1, S2, S3) at reception means (10) secured to a base support comprising a housing, the means (10) for receiving signals (S1, S2, S3) being placed inside said housing, said signals being representative of raw values (6) of at least one operating parameter of said at least one rotary machine (M1, M2, M3), the raw values (6) being picked up within said at least one rotary machine (M1, M2, M3), the method also comprising an automatic interpretation step of automatically interpreting received raw values (6) and a step of generating a diagnosis (Dc) about the operating state of said at least one rotary machine (M1, M2, M3) as a function of said raw values (6), said method being **characterized in that** it further includes a step of a user accessing distinct diagnosis levels (D1, D2) through an interactive interface (30) displayed by a local screen (31a) arranged on said housing or inside said housing, comprising at least:
- a first diagnosis level (D1) in which the user accesses the diagnosis and read the operating state directly; and
- a second diagnosis level (D2) in which the user accesses the raw values (6).

14. A diagnosis assistance method according to claim 13, **characterized in that** the automatic interpretation step comprises an association substep of associating the operating state with a known operating state.

15. A diagnosis assistance method according to claim 13 or 14, **characterized in that** it includes a step of authenticating the user in order to authorize or not authorize the user to access certain ones of said diagnosis levels (D1, D2) as a function of access rights of said user.

16. A medium suitable for being read by a computer and storing operating software (12), the medium being **characterized in that** the operating software (12) enables the automatic interpretation step and the step of generating the diagnosis (Dc) of the diagnosis assistance method according to any one of claims 13 to 15 to be performed.

17. Assembly comprising the diagnosis assistance system (100) according to any one of claims 1 to 12, and at least one industrial rotary machine (M1, M2, M3) formed by an industrial motor-and-fan unit comprising a motor and a fanwheel driven in rotation by said motor, or by an industrial motor-and-pump unit including a pump wheel.
